# FASCICULE DE BREVET EUROPEEN

(11) **EP 0 799 148 B1**
(45) Date de publication et mention de la délivrance du brevet: **14.10.1998**
(21) Numéro de dépôt: 95942761.8
(22) Date de dépôt: 18.12.1995
(51) Int. Cl.: B64G 1/62, B64G 1/58

(54) **Bouclier de freinage pour engin spatial et satellite ainsi equipe**
Aerodynamischer Bremsschild für Raumfahrzeug und damit ausgerüstete Satelliten
Braking shield for a spacecraft and satellite provided therewith

(30) Priorité: 19.12.1994 FR 9415236
(43) Date de publication de la demande: 08.10.1997
(73) Titulaire: CENTRE NATIONAL D'ETUDES SPATIALES, 75001 Paris (FR)
(72) Inventeur: CUSSAC, Thibery, F-31500 Toulouse (FR)
(74) Mandataire: Schrimpf, Robert
(86) Numéro de dépôt international: FR9501687
(87) Numéro de publication internationale: WO9619382

(56) Documents cités:
- EP-A- 0 453 361
- FR-A- 1 564 914
- US-A- 3 405 887
- US-A- 3 604 667
- US-A- 5 201 832
- RAUMFAHRTFORSCHUNG , vol. 13, no. 6, Novembre 1969 pages 262-268, PETRICK, H.K. 'ZUR AUSLEGUNG VON WÄRMESCHUTZSYSTEMEN FÜR GROSSE WIEDERVERWENDBARE TRÄGERRAKETEN'

## Description

La présente invention concerne un bouclier de freinage pour engin spatial, et plus précisément mais non exclusivement un bouclier destiné à ralentir un satellite d'observation de la terre par frottement avec les couches atmosphériques de faible altitude (typiquement 120-140 km).

Pour mettre sur orbite basse un satellite, il est possible d'utiliser un lanceur spécialement adapté.

Toutefois, il est parfois plus avantageux économiquement de profiter, lorsque cela est possible, de l'espace restant sous la coiffe d'un lanceur standard adapté à mettre sur orbite haute une charge utile, puis d'actionner des moyens de propulsion équipant le satellite pour l'envoyer sur orbite basse.

On a proposé, pour diminuer la quantité d'ergols embarquée par le satellite, de placer à l'arrière du satellite un voile de freinage destiné à ralentir le satellite par frottement avec les couches atmosphériques de basse altitude et par conséquent réduire l'altitude de l'apogée de son orbite. Les moyens de propulsion du satellite ne sont alors plus actionnés pour le freinage directement mais pour envoyer le satellite dans les couches atmosphériques de basse altitude où il perd de l'énergie par frottement puis, après freinage, lui faire quitter ces couches atmosphériques pour regagner son orbite définitive. Le voile de freinage est placé à l'arrière du satellite de manière à conférer à ce dernier une attitude stable, c'est-à-dire une incidence constante dans l'écoulement gazeux qui le frappe.

La publication US-A- 3 604 677 décrit un véhicule équipé d'un pénétrateur muni d'un anneau de freinage. Les instruments du pénétrateur sont protégés de l'impact du flux aérodynamique par l'enveloppe extérieure du pénétrateur lui-méme et non par l'anneau de freinage qui est situé à l'arrière.

On connait par ailleurs des boucliers de freinage pour la rentrée atmosphérique d'engins extra-atmosphériques, en forme de coque ogivale (pour conférer une attitude stable à l'engin) et placés à l'avant de ces derniers, qui offrent également en déviant les flux gazeux une protection thermique à l'engin ainsi équipé.

On a cherché à équiper les satellites de boucliers placés à l'avant, afin de réunir les fonctions de freinage et de protection thermique. Toutefois, ces boucliers présentent en raison de leur forme de coque ogivale un encombrement longitudinal parfois incompatible avec l'espace disponible sous la coiffe du lanceur, en particulier dans le cas où l'on profite de la mise sur orbite haute d'un autre satellite par un lanceur standard, comme indiqué précédemment.

La présente invention a pour objet de proposer un nouveau bouclier de freinage pour engin spatial, notamment un satellite d'observation, d'encombrement compatible avec l'espace disponible sous la coiffe d'un lanceur, et qui assure à la fois une stabilité de l'attitude de l'engin et une protection thermique.

Le bouclier selon l'invention se caractérise en ce qu'il comporte au moins un ajour conformé de manière à présenter une section de passage, offerte à l'écoulement gazeux frappant l'engin, augmentant avec l'angle d'incidence de ce dernier, pour créer un couple de forces aérodynamiques tendant à rappeler l'engin vers une position de moindre incidence.

Ainsi, on assure grâce à l'invention la stabilisation de l'attitude du satellite de façon passive, sans qu'il soit nécessaire d'adopter une forme de coque ogivale.

Dans une réalisation préférée de l'invention, le bouclier comporte une succession de parois présentant une symétrie axiale autour de l'axe longitudinal de l'engin, ces parois étant coaxiales et ménageant entre elles au moins une ouverture annulaire dont la section de passage offerte à l'écoulement augmente avec l'incidence de l'engin. De préférence, le bouclier comporte une succession de troncs de cônes disposés coaxialement de manière à se présenter en vue de face comme une surface pleine pour une incidence nulle et, pour une incidence non nulle, comme une surface ajourée créant un couple aérodynamique tendant à ramener l'engin vers une position d'incidence nulle.

La présente invention a encore pour objet un satellite équipé d'un bouclier tel que précité.

D'autres caractéristiques et avantages de la présente invention apparaîtront à la lecture de la description détaillée qui va suivre, d'un exemple de réalisation non limitatif de l'invention, et à l'examen du dessin annexé sur lequel :
- la figure 1 représente, en vue de face, un bouclier conforme à l'invention, à incidence nulle,
- la figure 2 montre, en coupe axiale, le bouclier représenté sur la figure 1,
- la figure 3 est une vue analogue à la figure 1, à incidence non nulle,
- la figure 4 montre, en coupe axiale, le bouclier représenté sur la figure 3,
- la figure 5 est une vue schématique, de côté; d'un satellite équipé du bouclier conforme à l'invention et représenté sur les figures 1 à 4.

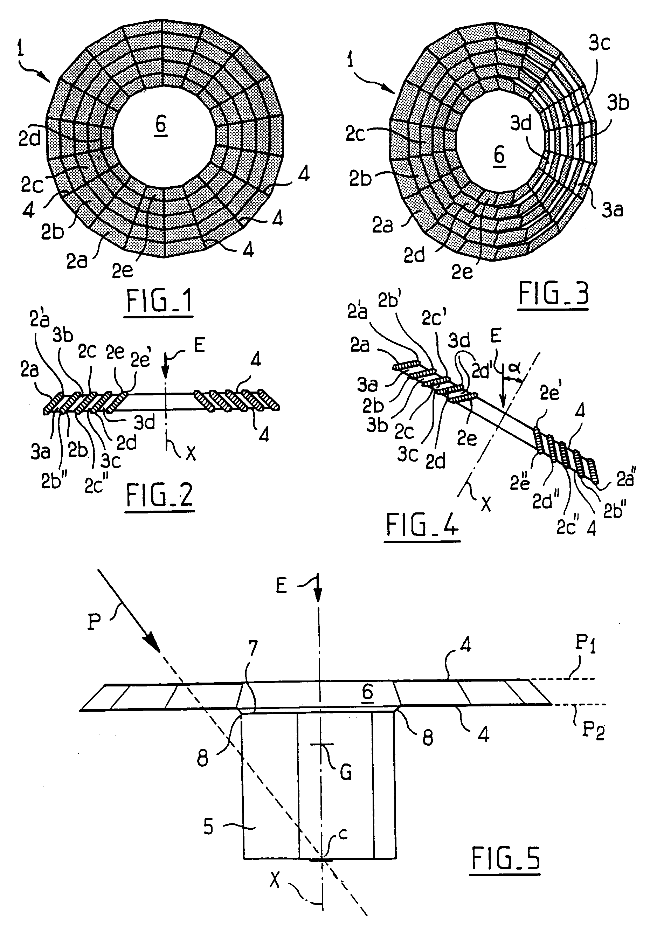

Le bouclier 1 représenté sur les figures comporte des parois référencées 2a, ..., 2e, en forme de troncs de cônes dans l'exemple décrit, présentant une symétrie axiale autour d'un axe de symétrie X normal au plan de la figure 1 et contenu dans le plan de coupe des figures 2 et 4. Les parois 2a, ..., 2e sont inclinées sur ledit axe X et convergent vers l'avant.

Les parois 2a, ..., 2e sont disposées coaxialement et ménagent entre elles des ouvertures annulaires 3a, ..., 3d. Les dimensions et l'agencement des parois 2a, ..., 2e sont choisis de sorte que le bouclier 1 présente, en vue de face et à incidence nulle, c'est-à-dire lorsque l'axe de symétrie X est confondu avec la direction E de l'écoulement gazeux frappant le bouclier, une surface pleine (figure 1), et lorsque l'angle d'incidence α est non nul, une surface ajourée (figure 3), afin de créer un couple de forces aérodynamiques tendant à redresser le bouclier 1 vers une position d'incidence nulle. Le diamètre externe du bouclier 1 est choisi de sorte que ce dernier présente une surface de freinage suffisante et offre une protection thermique, en déviant l'écoulement gazeux en éloignement du corps 5 du satellite, à des éléments externes (générateur solaire, senseurs, ...) du satellite, placés sur le corps 5 du satellite en aval du bouclier 1 vis-à-vis de l'écoulement gazeux.

Les bords radialement intérieurs 2a', 2b', 2c', 2d' des parois 2a, 2b, 2c et 2d coïncident respectivement, en projection selon la direction de l'axe X, avec les bords radialement extérieurs 2b'', 2c'', 2d'', 2e'' des parois 2b, 2c, 2d et 2e. Les parois 2a, ..., 2e s'étendent axialement sur une même hauteur, les bords radialement intérieurs (ou bords avant) 2a', ..., 2e' étant situés dans un premier plan P₁ perpendiculaire à l'axe X, et les bords radialement extérieurs 2a'', ..., 2e'' (ou bords arrière) étant situés dans un deuxième plan P₂ perpendiculaire à l'axe X, situé en aval du premier.

Les parois 2a, ..., 2e sont assemblées par toute structure appropriée connue de l'homme du métier, par exemple par des raidisseurs radiaux 4, au nombre de dix-huit dans l'exemple décrit, s'étendant radialement et régulièrement espacés autour de l'axe X. Les raidisseurs 4 se présentent dans l'exemple décrit sous forme de couples de tiges parallèles s'étendant dans lesdits premier et deuxième plans précités, et formant entretoises pour les parois 2a, ..., 2e. Pour améliorer encore la rigidité, on peut recourir à des éléments de structure supplémentaires tels que des barres reliant la paroi 2a (ou l'extrémité de certains raidisseurs) aux côtés du corps du satellite.

Le bouclier 1 représenté sur les figures 1 à 4 équipe l'avant d'un satellite dont le corps 5 est allongé selon un axe longitudinal coïncidant avec l'axe X. Le bouclier 1 est fixé au corps 5 du satellite par tout moyen approprié connu de l'homme du métier, par exemple par des jambes de maintien 8 reliant les tiges des raidisseurs 4 situées dans le plan P₂ à la face frontale 7 du corps 5. Les jambes de maintien peuvent également, en variante, relier la paroi 22 au corps du satellite.

Le bord 2e' radialement intérieur de la paroi 2e, délimite une ouverture centrale 6 du bouclier 1, et son diamètre est choisi de préférence égal au diamètre de la face frontale 7 du corps 5 du satellite, comme représenté, de sorte qu'à un angle d'incidence nul, la face frontale 7 du corps 5 du satellite, plane, s'oppose à l'écoulement passant au travers de l'ouverture 6. A un angle d'incidence non nul, la paroi 2e et la face frontale 7 offrent une section de passage non nulle à l'écoulement, entre les jambes de maintien 8.

Dans l'exemple décrit, la face frontale 7 du corps 5 du satellite présente un diamètre égal à 800 mm, le bouclier 1 est de diamètre externe (mesuré en partant du bord 2a'') égal à 2000 mm et de diamètre interne (mesuré en partant du bord 2e') égal à 800 mm. Les bords 2a', ..., 2e' radialement intérieurs des parois 2a, ..., 2e sont radialement espacés d'une distance de 120 mm. Chaque paroi 2a, ..., 2e présente une hauteur de 200 mm et un même demi-angle au sommet, égal à 31° dans l'exemple décrit. La position du centre de poussée évolue sur l'axe de symétrie X et se situe entre 200 et 300 mm en arrière de l'interface bouclier - corps du satellite, selon que l'angle d'incidence α de la vitesse relative satellite / atmosphère, par rapport à l'axe de symétrie X, varie de 5 à 31°. On a indiqué sur la figure 5 par la flèche P la direction de la résultante des forces de poussée sur le satellite pour un angle d'incidence α de 30°, correspondant aux figures 3 et 4. Le centre de poussée C se situe sur l'axe de symétrie X en arrière du centre de gravité G, et garantit une attitude stable du satellite.

Finalement, l'invention permet de disposer d'un bouclier de freinage de faible encombrement longitudinal et, selon la position du centre de gravité du satellite, soit de réduire l'instabilité du satellite, ce qui permet de se contenter pour le contrôle de l'attitude du satellite d'un système à capacité de contrôle moindre que celle qui serait nécessaire en l'absence de bouclier, soit, et préférentiellement, d'assurer de façon autonome et complètement passive la stabilisation de l'attitude du satellite comme c'est le cas pour l'exemple décrit. De préférence, le bouclier 1 ne comporte pas de pièces en mouvement nécessitant un mécanisme de gerbage et de déploiement et il est ainsi particulièrement fiable. Par ailleurs, le bouclier dirige l'écoulement gazeux frappant le satellite radialement vers l'extérieur et offre une protection thermique totale aux éléments extérieurs au corps du satellite (senseurs, antennes, générateurs solaires) situés derrière le bouclier.

L'invention n'est pas limitée à l'exemple décrit. On peut notamment modifier, sans sortir du cadre de la présente invention, le nombre et la géométrie des parois constituant le bouclier, par exemple adopter une forme polygonale. La face avant du corps du satellite peut également pénétrer à l'intérieur du bouclier. Les parois constituant le bouclier peuvent être repliées pour des raisons d'encombrement lors du lancement et déployées en vol par un mécanisme approprié.

On peut équiper avec un bouclier selon l'invention tout type d'engin spatial, par exemple, une sonde planétaire utilisant un freinage atmosphérique pour atteindre une orbite basse autour d'un astre quelconque.

## Revendications

1. Bouclier (1) de freinage et de protection thermique pour un engin spatial (5), ce bouclier étant situé à l'avant de l'engin pour s'opposer à un écoulement gazeux frappant l'engin, caractérisé en ce qu'il comporte une succession de parois coaxiales (2a, ..., 2e) présentant une symétrie axiale autour de l'axe longitudinal (X) de l'engin, les dimensions et l'agencement de ces parois étant choisis en sorte que le bouclier présente, en vue de face et à incidence nulle, une surface pleine et ces parois ménageant entre elle des ouvertures annulaires (3a....,3d) dont la section de passage offerte à l'écoulement augmente avec l'angle d'incidence de l'engin, pour créer un couple de forces aérodynamiques tendant à rappeler l'engin vers une position de moindre incidence.

2. Bouclier selon la revendication 1, caractérisé en ce que lesdites parois (2a, ..., 2e) sont inclinées sur ledit axe longitudinal, et convergent vers l avant.

3. Bouclier selon la revendication 2, caractérisé en ce que les bords avant (2a', ..., 2e') sont contenus dans un même plan (P₁).

4. Bouclier selon l'une des revendications 2 et 3, caractérisé en ce que les bords arrière (2a'',..., 2e'') desdites parois (2a,... 2e) sont contenus dans un même plan (P₂).

5. Bouclier selon l'une des revendications 1 à 4, caractérisé en ce que chacune desdites parois (2a, ..., 2e) présente une forme en tronc de cône.

6. Bouclier selon la revendication 5, caractérisé en ce que lesdites parois présentent le même demi-angle au sommet.

7. Bouclier selon la revendication 6, caractérisé en ce que le demi-angle au sommet desdites parois est égal à 31°, leur hauteur vaut 200 mm, leur écartement radial 120 mm.

8. Bouclier selon l'une des revendications 1 à 7, caractérisé en ce que les parois (2a,...,2e) constituant le bouclier sont aptes à être repliées pour diminuer leur encombrement lors du lancement et a être déployées en vol.

9. Satellite équipé d'un bouclier conforme à l'une des revendications précédentes.

10. Satellite selon la revendication 9, caractérisé en ce que la face avant du corps (5) du satellite pénètre à l'intérieur du bouclier.

## Claims

1. A braking and heat protection shield (1) for a spacecraft (5), the shield being situated at the front of the spacecraft to oppose a flow of gas striking the spacecraft, and being characterized in that it comprises a succession of coaxial walls (2a, ..., 2e) having axial symmetry about the longitudinal axis (X) of the spacecraft, the dimensions and the organization of said walls being selected so that, in front view and at zero incidence, the shield presents a solid surface and said walls leave between them annular openings (3a, ..., 3d) of through section offered to the flow that increases with the increasing angle of incidence of the spacecraft, so as to create an aerodynamic force couple tending to return the spacecraft to a position of lesser incidence.

2. A shield according to claim 1, characterized in that said walls (2a, ..., 2e) are inclined relative to said longitudinal axis, and converge forwards.

3. A shield according to claim 2, characterized in that the leading edges (2a', ..., 2e') lie in a common plane (P₁).

4. A shield according to claim 2 or 3, characterized in that the trailing edges (2a'', ..., 2e'') of said walls (2a, ..., 2e) lie in a common plane (P₂).

5. A shield according to any one of claims 1 to 4, characterized in that each of said walls (2a, ..., 2e) is in the form of a truncated cone.

6. A shield according to claim 5, characterized in that said walls all have the same half-angle at the apex.

7. A shield according to claim 6, characterized in that the half-angle at the apex of said walls is equal to 31°, their axial extent being 200 mm, and their radial spacing being 120 mm.

8. A shield according to any one of claims 1 to 7, characterized in that the walls (2a, ..., 2e) constituting the shield are suitable for being folded to reduce bulk during launch and for being deployed in flight.

9. A satellite fitted with a shield according to any preceding claim.

10. A satellite according to claim 9, characterized in that the front face of the satellite body (5) penetrates inside the shield.

## Patentansprüche

1. Schild (1) für die Abbremsung und den Wärmeschutz eines Raumfahrzeuges (5), wobei dieser Schild an der Vorderseite des Raumfahrzeuges angebracht ist, um einen auf das Raumfahrzeug aufprallenden Luftstrom abzuwehren,
**dadurch gekennzeichnet**, **daß**
dieser Schild eine Reihe von koaxialen Wänden (2a, ..., 2e) aufweist, die axial symmetrisch um die Längsachse (X) des Raumfahrzeuges angeordnet sind, wobei die Abmessungen und die Gestaltung dieser Wände so gewählt werden, daß der Schild an der Vorderseite bei einem Trimmwinkel von Null eine geschlossene Fläche bildet, und dadurch, daß diese Wände untereinander kreisförmige Öffnungen (3a, ..., 3d) bilden, dessen für den Luftstrom verfügbarer Strömungsquerschnitt mit dem Trimmwinkel des Raumfahrzeuges ansteigt, um ein aerodynamisches Kraftmoment zu erzeugen, welches dazu neigt, das Raumfahrzeug in eine Position mit einem geringeren Trimmwinkel zurückzuführen.

2. Schild nach Anspruch 1,
**dadurch gekennzeichnet**, **daß**
die Wände (2a, ..., 2e) auf die Längsachse geneigt sind und in der vorderen Richtung konvergieren.

3. Schild nach Anspruch 2,
**dadurch gekennzeichnet**, **daß**
die vorderen Kanten (2a', ..., 2e') in der gleichen Ebene (P₁) enthalten sind.

4. Schild nach einem der Ansprüche 2 und 3,
**dadurch gekennzeichnet**, **daß**
die hinteren Kanten (2a'', ..., 2e'') der Wände (2a, ..., 2e) in der gleichen Ebene (P₂) enthalten sind.

5. Schild nach einem der Ansprüche 1 bis 4,
**dadurch gekennzeichnet**, **daß**
jede der Wände (2a, ..., 2e) die Form eines Kegelstumpfes hat.

6. Schild nach Anspruch 5,
**dadurch gekennzeichnet**, **daß**
diese Wände an ihrem Scheitel den gleichen Halbwinkel haben.

7. Schild nach Anspruch 6,
**dadurch gekennzeichnet**, **daß**
der Halbwinkel am Scheitel der Wände 31° beträgt, und daß sie eine Höhe von 200 mm haben und in einem radialen Abstand von 120 mm angeordnet sind.

8. Schild nach einem der Ansprüche 1 bis 7,
**dadurch gekennzeichnet**, **daß**
die den Schild bildenden Wände (2a, ..., 2e) eingeklappt werden können, um ihren Raumbedarf beim Start zu reduzieren, und daß sie im Flug wieder ausgeklappt werden können.

9. Satellit, welcher mit einem Schild nach einem der vorausgegangenen Ansprüche ausgerüstet ist.

10. Satellit nach Anspruch 9,
**dadurch gekennzeichnet**, **daß**
die Vorderseite des Körpers (5) des Satelliten in die Innenseite des Schildes reicht.
